(19) Europäisches Patentamt / European Patent Office / Office européen des brevets

(11) **EP 2 624 573 A1**

(12) **EUROPEAN PATENT APPLICATION**

(43) Date of publication:
**07.08.2013 Bulletin 2013/32**

(51) Int Cl.:
*H04N 13/04* (2006.01)          *G02B 27/22* (2006.01)
*G02B 27/26* (2006.01)          *G03B 21/00* (2006.01)
*H04N 9/31* (2006.01)

(21) Application number: **13153465.3**

(22) Date of filing: **31.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.01.2012 JP 2012017603**

(71) Applicants:
• **Funai Electric Advanced Applied Technology
Research Institute Inc.
Daito-shi
Osaka 574-0013 (JP)**

• **Funai Electric Co., Ltd.
Daito-shi,
Osaka 574-0013 (JP)**

(72) Inventor: **Koizumi, Yukio
Tsukuba-shi Ibaraki 305-0047 (JP)**

(74) Representative: **Grünecker, Kinkeldey,
Stockmair & Schwanhäusser
Leopoldstrasse 4
80802 München (DE)**

(54)     **Laser scan type projector and three dimensional display system**

(57)     Disclosed is a laser scan type projector including laser light sources for three colors which alternately emit a laser light relating to an image for left eye and a laser light relating to an image for right eye on the basis of an image signal, a polarization switching unit for changing the polarization directions of the laser light relating to the image for left eye and the laser light relating to the image for right eye, a first 1/4 wavelength phase difference device which makes the two laser lights in which the polarization directions are switched by the polarization switching unit enter and which converts the polarization directions of the entered two laser lights so that each of the two laser lights be a circularly polarized light in an opposite direction from each other and a scan unit which scans a projection screen with the laser lights which are circularly polarized.

*FIG.1*

**Description**

BACKGROUND OF THE INVENTION

1. Field of the Invention

The present invention relates to a laser scan type projector and a three dimensional display system using the laser scan type projector.

2. Description of Related Art

Recently, there are developed various types of three dimensional display apparatuses which can project three dimensional video (3D video). Japanese Patent No. 3463846 discloses a direct type image display apparatus in which the image display apparatus thereof included a liquid crystal display device and optical units arranged in front of the liquid crystal display device, and in which the image displayed in the image display apparatus is orthogonal circularly polarized lights having different polarity alternately for each pixel line and this image is observed by an overseer wearing a polarized glasses. Japanese Patent No. 3380132 discloses a direct type image display apparatus wherein an image displayed in the image display apparatus is an image for both left and right eyes which is orthogonal circularly polarized lights having different polarity alternately for each pixel line and the zone which can be seen in three dimension is enlarged by wearing the polarized glasses and observing via the lenticular lens plate and the slit plate provided in front of the display apparatus.

However, there is a request for displaying a high resolution three dimensional video by a laser scan type projector because in the laser scan type projector having three laser light sources which emit red light (R), green light (B) and blue light (B) and which uses reflection by the resonant mirror to emit the laser light from the laser light sources on the screen by scanning in two axis directions to display an image, the three laser lights themselves are lights having high degree of polarization and the intensity of the three primary colors can be controlled independently.

SUMMARY OF THE INVENTION

In the above described direct type three dimensional display apparatuses, there is a problem that the brightness of image is reduced to the level lower than half comparing to a normal image, in principal, because the right eye image and the left eye image are observed alternately by the polarized glasses.

Similar problem exists in a laser scan type projector and in particular, having high modulation efficiency of polarization in order to secure the brightness in the three dimensional video is important.

The object of the present invention is to provide a laser scan type projector for three dimensional display in which modulation efficiency of polarization can be high and a three dimensional display system using the above projector.

In order to solve the above problem, according to one aspect of the present invention, there is provided a laser scan type projector including laser light sources for three colors, the colors being RGB, which alternately emits a laser light relating to an image for left eye and a laser light relating to an image for right eye on the basis of an image signal, a polarization switching unit which makes the laser light relating to the image for left eye and the laser light relating to the image for right eye which have a same incident polarization direction enter and switches the entered two laser lights in two different polarization directions by rotating each of the two laser lights in an opposite direction from the incident polarization direction according to the image for left eye and the image for right eye, a first 1/4 wavelength phase difference device which makes the two laser lights in which the polarization directions are switched by the polarization switching unit enter and which converts the polarization directions of the entered two laser lights so that each of the two laser lights be a circularly polarized light in an opposite direction from each other and a scan unit which scans a projection screen with the laser lights which are circularly polarized by the first 1/4 wavelength phase difference device, and a direction of a slow axis of the first 1/4 wavelength phase difference device forms a 90 degrees angle with the polarization direction of the laser lights before entering the polarization switching unit.

According to another aspect of the present invention, there is provided a three dimensional display system including the laser scan type projector, a screen on which a projection image from the laser scan type projector is projected and a polarized glasses which projection light of the screen enters, and the polarized glasses comprises second 1/4 wavelength phase difference devices for left and right eyes which the projection light of the screen enters and polarizers which detect light emitted from the second 1/4 wavelength phase difference devices, transmission axes of the polarizers being different from each other by 90 degrees.

According to the invention, the laser scan type projector for three dimensional display in which modulation efficiency of polarization can be high and the three dimensional display system using the above projector can be provided

BRIEF DESCRIPTION OF THE DRAWINGS

The above and other objects, advantages and features of the present invention will become more fully understood from the detailed description given hereinafter and the appended drawings which are given by way of illustration only, and thus are not intended as a definition of the limits of the present invention, and wherein:

FIG. 1 is a diagram showing a laser scan type projector 101 and a configuration of a three dimensional display system 102 according to an embodiment of the present invention;

FIG. 2 is a diagram showing an outline of an optical arrangement of the circular polarization conversion device unit 5 which consists a part of the laser scan type projector 101 shown in FIG. 1 and a polarized glasses 10 which consists a part of the three dimensional display system 102 shown in FIG. 1;

FIG. 3 is a diagram showing a specific optical arrangement and a parameter configuration of the circular polarization conversion device unit 5 which consists a part of the laser scan type projector 101 shown in FIG. 1 and a polarized glasses 10 which consists a part of the three dimensional display system 102 shown in FIG. 1;

FIG. 4 is a diagram showing a structure of a 1/2 wave length liquid crystal device 6;

FIG. 5 is a diagram for explaining the Poincare sphere;

FIGS. 6A to 6C are diagrams for explaining operations of a 1/2 wavelength liquid crystal device 6 and a 1/4 wavelength phase difference device 7 of the circular polarization conversion device unit 5 and a 1/4 wavelength phase difference device 11 of the polarized glasses 10 with regard to the left eye system using the Poincare sphere;

FIGS. 7A to 7C are diagrams for explaining operations of a 1/2 wavelength liquid crystal device 6 and a 1/4 wavelength phase difference device 7 of the circular polarization conversion device unit 5 and a 1/4 wavelength phase difference device 11 of the polarized glasses 10 with regard to the right eye system using the Poincare sphere;

FIG. 8 is a diagram showing the embodiment example 1 of the circular polarization conversion device units 5 and 50 and the polarized glasses 10 according to the embodiment;

FIG. 9 is a diagram showing the embodiment example 2 of the circular polarization conversion device units 5 and 50 and the polarized glasses 10 according to the embodiment;

FIG. 10 is a diagram showing the embodiment example 3 of the circular polarization conversion device units 5 and 50 and the polarized glasses 10 according to the embodiment;

FIG. 11 is a diagram showing the embodiment example 4 of the circular polarization conversion device units 5 and 50 and the polarized glasses 10 according to the embodiment;

FIG. 12 is a diagram showing modulation efficiency of polarization in the embodiment examples 1 to 4 of the circular polarization conversion device units 5 and 50 and the polarized glasses 10 according to the embodiment;

FIG. 13 is a diagram showing a specific optical arrangement of a circular polarization conversion device unit 50 in the laser scan type projector and the polarized glasses 10 of the three dimensional display system according to a comparison example and the parameter configuration thereof;

FIG. 14 is a diagram for explaining the operation in the left eye system of the comparison example using the Poincare sphere;

FIG. 15 is a diagram for explaining the operation in the right eye system of the comparison example using the Poincare sphere;

FIG. 16 is a diagram showing the measurement values of phase differences (degree) and the calculation values of modulation efficiency of polarization regarding the circular polarization conversion device unit 50 and the polarized glasses 10 according to the comparison example for every 5 nm; and

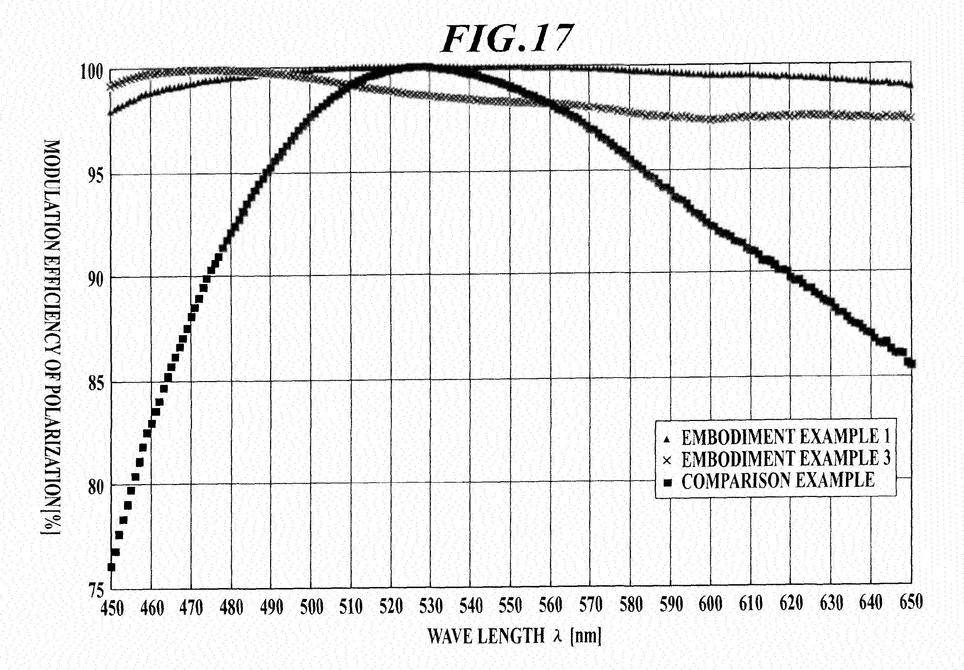

FIG. 17 is a diagram comparing the modulation efficiency of polarization between the circular polarization conversion device units 5, 50 and the polarized glasses 10 according to the embodiments 2 and 3 and the comparison example.

DESCRIPTION OF THE PREFERRED EMBODIMENTS

Hereinafter, the laser scan type projector 101 and the three dimensional display system 102 according to the embodiment of the present invention will be described with references to the drawings.

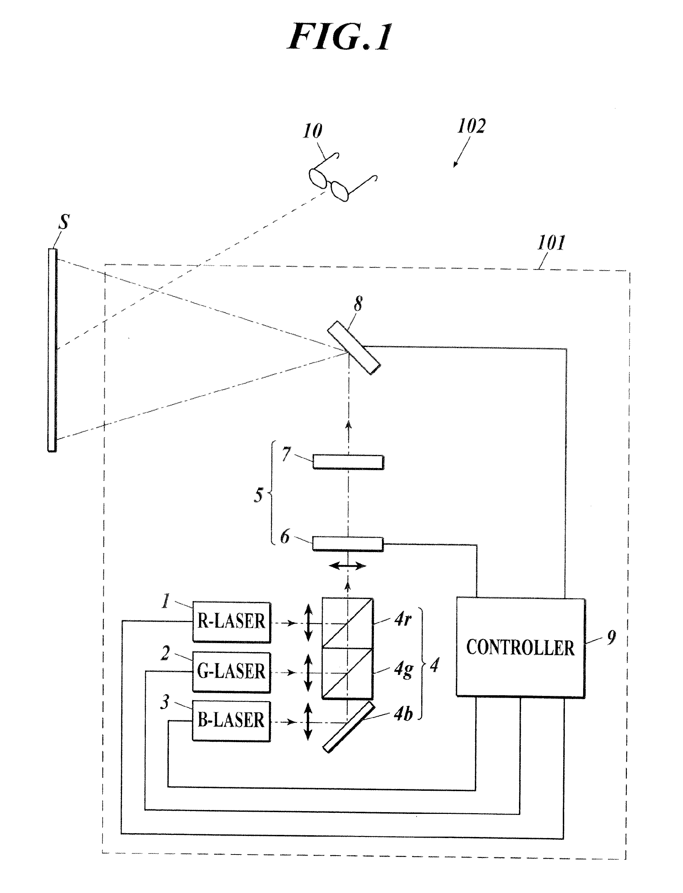

FIG. 1 is the diagram showing the laser scan type projector 101 and the configuration of the three dimensional display system 102 according to the embodiment of the present invention.

The three dimensional display system 102 includes the laser scan type projector 101 and the polarized glasses 10.

The laser scan type projector 101 includes laser light sources 1, 2 and 3, a mirror unit 4 which reflects the laser lights emitted from the laser light sources 1, 2 and 3 and combine the reflected lights into one light, a circular polarization conversion device unit 5 which converts the polarization of the light combined by the mirror unit 4 into a circularly polarized light corresponding to the image for left eye or the image for right eye, a scan type projection mirror 8 as a scan unit which scans the screen S which is a projection screen with the laser light emitted from the circular polarization conversion device unit 5, a controller 9 which controls each unit and the like.

The laser light sources 1, 2 and 3 alternately emits a laser light relating to the image for left eye and the laser beam relating to the image for right eye according to the control of the controller 9 based on image signals. The laser light sources 1, 2 and 3 are semiconductor lasers (LD: Laser Diodes), for example, and the laser light source 1 emits the red laser light, the laser light source 2 emits the green laser light and the laser light source 3 emits the blue laser light. The polarization direction of the laser lights match each other and is set to be parallel with a paper surface as shown in FIG. 1, for example.

The mirror unit 4 includes a dichroic mirror 4r which reflects the laser light (rid laser light) emitted from the laser light source 1, a dichroic mirror 4g which reflects the laser light (green laser light) emitted from the laser light source 2 and a total reflection mirror 4b which reflects the laser light (blue laser light) emitted from the laser light source 3. This mirror unit 4 reflects the laser lights of three colors emitted from the laser light sources 1, 2 and 3 with individual reflection surfaces and combines the laser lights so that their light axes match each other. The polarization direction of the combined laser light is set so as to be parallel with a paper surface, for example, as shown in FIG. 1. The mirror unit 4 reflects the combined laser light toward the 1/2 wavelength liquid crystal device 6 of the circular polarization conversion device unit 5.

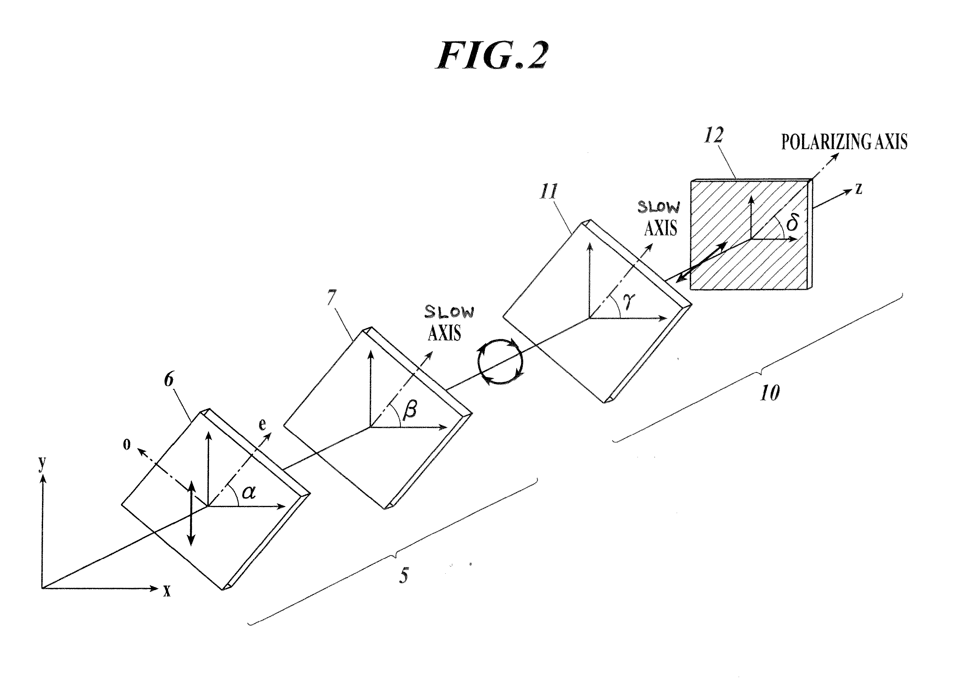

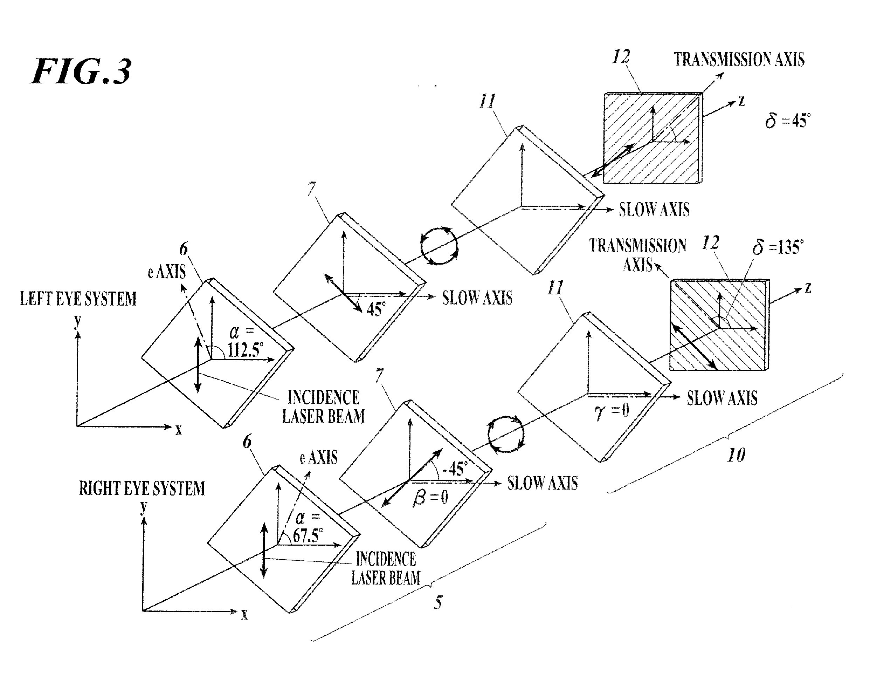

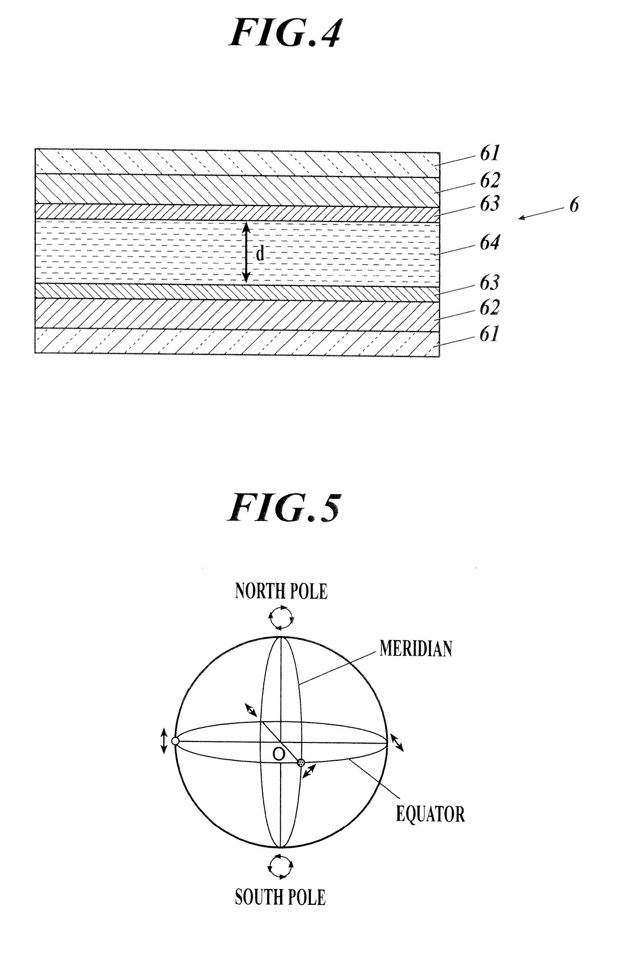

FIG. 2 is a diagram showing an outline of optical arrangement of the circular polarization conversion device unit 5 which consists a part of the laser scan type projector 101 shown in FIG. 1 and the polarized glasses 10 which consists a part of the three dimensional display system 102 shown in FIG. 1. FIG. 3 is a diagram showing a specific optical arrangement and a parameter configuration of the circular polarization conversion device unit 5 which consists a part of the laser scan type projector 101 shown in FIG. 1 and the polarized glasses 10 which consists a part of the three dimensional display system 102 shown in FIG. 1. FIG. 4 is a diagram showing a structure of the 1/2 wave length liquid crystal device 6.

The circular polarization conversion device unit 5 includes the 1/2 wavelength liquid crystal device 6 and a 1/4 wavelength phase difference device 7 which is the first 1/4 wavelength phase difference device. The circular polarization conversion device unit 5 converts the polarization of the input laser light into the circularly polarized light corresponding to the image for left eye or the image for right eye.

As shown in FIG. 4, the 1/2 wavelength crystal liquid device 6 is configured by a high dielectric liquid crystal 64 being enclosed with a pair of transparent substrates 61, 61, the transparent substrates 61 and 61 forming a pair being arranged so as to face each other, for example. Transparent electrodes 62 such as ITO or the like are formed on the transparent substrates 61 and 61 and orientation films 63 are further provided on the inner surface of the transparent electrodes 62 and 62 to control the molecular orientation of the high dielectric liquid crystals. The 1/2 wavelength liquid crystal device 6 is configured so that the molecular long axes align in the direction which is ±22.5 degrees from the orientation direction of the orientation films 63 by a bipolar voltage being applied. The direction in which molecular long axes align is the e axis and the axis which is orthogonal to the e axis is the o axis. Here, the e axis corresponds to the slow axis and the o axis corresponds to the fast axis. In FIG. 2, the e axis o the 1/2 wavelength crystal liquid device forms an angle $\alpha$ from the x axis. The slow axis of the 1/4 wavelength phase difference device 7 of the circular polarization conversion device unit 5 and the slow axis of the 1/4 wavelength phase difference device 11 of the polarized glasses 10 form angles $\beta$ and $\gamma$ from the x axis, respectively.

Although, there is a degree of freedom in such the optical axis arrangement of the circular polarization conversion device unit 5 and the polarized glasses 10, in the embodiment, the arrangement and the parameter configuration are as shown in FIG. 2. The orientation direction of the orientation films in the 1/2 wavelength liquid crystal device 6 is set to the y axis direction and the angle $\alpha$ of the e axis (slow axis) is $\alpha$=67.5 degrees and $\alpha$=112.5 degrees.

Further, according to the polarity of the applied voltage, the 1/2 wavelength liquid crystal device 6 converts the polarization direction of the incident laser light to the direction of ±45 degrees, respectively.

In the 1/4 wavelength phase difference device 7, the slow axis is set to $\beta$=0 degrees. That is, the slow axis is arranged orthogonal to the polarization direction of the incident laser light. As for the 1/4 wavelength phase difference device 7, polycarbonate or olefin system material can be used, for example. Such material is a phase difference film having wavelength dependency in a visible light region.

The scan type projector mirror 8 is an electromagnetic activation type MEMS mirror using the technique of MEMS (Micro Electro Mechanical Systems), for example. The scan type projector mirror 8 moves laser light by being activated according to the resonant frequency which is specific to the scan type projector mirror 8, for example. The scan type projector mirror 8 is electromagnetically activated by the control of the after-mentioned controller 9, reflects the laser light emitted from the 1/4 wavelength phase difference device 7 of the circular polarization conversion device unit 5 in a two dimensional directions and scans the screen S with the laser light to display the image for left eye and the image for right eye based on image signals.

The controller 9 executed a control to alternately emit the laser light corresponding to the image for left eye and the laser light corresponding to the image for right eye from the laser light sources 1, 2 and 3 on the basis of image signals, for example. Further, the controller 9 executes a control to switch the polarization direction of the laser light that passes through the 1/2 wavelength liquid crystal device 6 according to the image for left eye and the image for right eye by applying an activation voltage between the pair of electrodes 52 and 52 (transparent electrodes 52) of the 1/2 wavelength liquid crystal device 6 on the basis of image signals, for example. In such way, the controller 9 has the function to control the 1/2 wavelength liquid crystal device 6. Moreover, the controller 6 executes a control to project an image by scanning the screen S with laser light by reflecting the laser light from the laser light source 1, 2 and 3 in two dimensional directions based on image signals, for example.

The polarized glasses 10 includes a 1/4 wavelength phase difference device 11 which is the second 1/4 wavelength phase difference device and a polarizer 12 as shown in FIGS. 2 and 3. In particular, the polarized glasses 10 includes the 1/4 wavelength phase difference device 11 and the polarizer 12 for left eye and the 1/4 wavelength phase difference device 11 and the polarizer 12 for right eye.

In the 1/4 wavelength phase difference device 11 which is the second 1/4 wavelength phase difference device, the slow axis is set to $\gamma$=0 degrees. That is, the slow axis is arranged orthogonal to the polarization direction of the incident laser light.

The 1/4 wavelength phase difference devices 11 are retarders for broadband and their wavelength dependency in the visible light region is extremely low comparing to the 1/4 wavelength phase difference device 7 in the circular polarization conversion device unit 5.

In the polarizers 12, the direction of transmission axis is set to $\delta$=45 degrees for left eye and set to $\delta$=135 degrees for right eye, for example.

Next, the operations regarding polarization in the circular polarization conversion device unit 5 and the polarized glasses 10 with respect to the laser scan type projector 101 and the three dimensional display system 102 according to the embodiment of the present invention will be described.

As shown in FIG. 1, the laser lights of three colors which are modulated by a three dimensional video in the laser scan type projector are input to the circular polarization conversion device unit 5. The polarization direction of the incident laser light is in the y axis direction shown in FIG. 3 as shown in FIG. 3.

In the 1/2 wavelength liquid crystal device 6, the alignment of liquid crystal in the liquid crystal layer 64 is to be switched by the activation voltage being applied between the transparent electrodes 62 and 62 by the control of the controller 9 based on image signals. Then, the laser light which passes through the 1/2 wavelength liquid crystal device 6 is switched in two polarization directions which are different according to the image for left eye and the image for right eye.

In particular, in the 1/2 wavelength liquid crystal device 6, the activation voltage of +V is applied to the laser light relating to the image for left eye and the polarization direction of the laser light is converted by +45 degrees from the y axis and in the state where the activation voltage of -V is applied to the laser light relating to the image for right eye, the polarization direction of the laser light is converted by -45 degrees from the y axis. That is, the polarization direction of laser light is parallel wit the orientation direction of the 1/2 wavelength liquid crystal device 6, and arrangement of the slow axes (e axes) of the 1/2 wavelength liquid crystal device 6 is switched by the angle of $\pm$22.5 degrees by the activation voltage of $\pm$V being applied and thereby the polarization direction of the slow axes are converted in the direction of $\pm$45 degrees with respect to the y axis to pass through the 1/2 wavelength liquid crystal device 6. In such way, the polarization direction of the laser light corresponding to the image for left eye and the laser light corresponding to the image for right eye is switched so as to be orthogonal to each other.

Here, because a high dielectric liquid crystal is used for the 1/2 wavelength liquid crystal device 6, the switching in the image for left eye and the image for right eye can be performed completely within the blanking period of image signals (for example, interval of 1 [ms]). Here, the 1/2 wavelength liquid crystal device 6 functions as the polarization switching unit.

The 1/4 wavelength phase difference device 7 includes a function to convert the linearly polarized light of the incident laser light to circularly polarized light. For example, the 1/4 wavelength phase difference device 7 converts the laser light which is made to be a linearly polarized light where the polarization direction is +45 degrees corresponding to the image for left eye to a left-handed circularly polarized light and converts the laser light which is made to be a linearly polarized light where the polarization direction is -45 degrees from the y axis corresponding to the image for right eye into a right-handed circularly polarized light. In such way, the linearly polarized lights in the visible light region (450 nm to 650 nm) are converted into circularly polarized lights by the circular polarization conversion device unit 5.

Regarding the operation of the polarized glasses 10, the 1/4 wavelength phase difference devices 11 of the polarized glasses 10 are disposed so that the slow axes thereof be optically parallel with the slow axis of the 1/4 wavelength phase difference device 7 of the circular polarization conversion device unit 5 as shown in FIG. 3. Then, by the function of the 1/4 wavelength phase difference devices 11, the left-handed circularly polarized light is converted to a linearly polarized light which is -45 degreed from the y axis and the right-handed polarized light is converted to a linearly polarized light which is +45 degrees from the y axis. Therefore, by arranging the polarization direction of the polarizers 12 provided at the light emission side of the 1/4 wavelength phase difference device 11 as shown in FIG. 3, for example, the three dimensional video can be observed by being subjected to channel separation. That is, the polarizer 12 in the left eye side sets the transmission axis to -45 degrees from the y axis and the polarizer 12 in the right eye side sets the transmission axis to +45 degrees from the y axis.

Next, operations of the circular polarization conversion device unit 5 and the polarized glasses 10 will be described by using the Poincare sphere.

An arbitrary polarization can be expressed with points on the surface of a sphere like a globe, and this sphere is called the Poincare sphere. FIG. 5 is a diagram for explaining the Poincare sphere. The point on the equator expresses a linearly polarized light (ellipticity 0), the points on the south pole and the north pole express the circularly polarized lights (ellipticity 1) and all of the points other and the ones on the equator and the two poles express elliptically polarized lights. The main axis orientation is the same and only the ellipticity differs in the polarization on the same meridian. The points in the north hemisphere express the right-handed polarized lights and the points in the south hemisphere express the left-handed polarized lights. The description of operation using the Poincare sphere will be given first by supposing that the characteristics of each optical device have ideal phase difference.

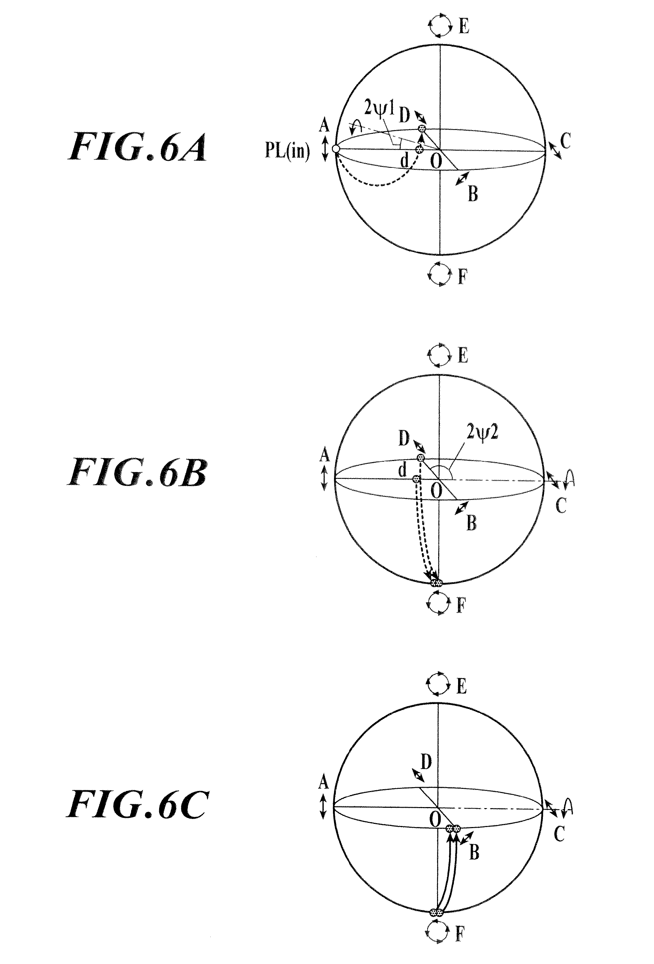

The left eye system shown in FIG. 3 will be described by using the Poincare sphere. FIGS. 6A to 6C are diagrams for explaining operations of the 1/2 wavelength liquid crystal device 6 and the 1/4 wavelength phase difference device 7 of the circular polarization conversion device unit 5 and the 1/4 wavelength phase difference device 11 of the polarized glasses 10 with regard to the left eye system using the Poincare sphere. In FIG. 6A, the incident laser light is indicated as PL (in) and its point on the Poincare sphere is the point A.

The slow axis (e axis) of the 1/2 wavelength liquid crystal device 6 has the orientation angle $\Psi 1=22.5$ degrees with respect to the polarization direction of the incident laser light. The phase difference R of the 1/2 wavelength liquid crystal device 6 is $1/2\lambda$. Therefore, on the equatorial plane of the Poincare sphere, the straight line from the orientation OA to the direction of the meridian $2\Psi 1$ which passes through the center O is set as the rotary axis. The sectional plane which is perpendicular to the rotary axis and which passes through the point A of the polarized incident light is set to the revolved section, and the point A is rotationally moved by rotating to the right for the angel corresponding to the following formula (1) along the arc on the sphere formed by the revolved section.

$$\delta = 360 \text{ degrees} \times R/\lambda = 180 \text{ degrees} \qquad \text{formula (1)}$$

As the result, the point A moves to the point D on the Poincare sphere shown in FIG. 6A. The point D shows the linearly polarized light of 45 degrees to the left.

Next, the orientation angle of the slow axis of the 1/4 wavelength phase difference device 7 is $\Psi 2=45$ degrees with respect to the polarized incident light of the 1/4 wavelength phase difference device 7. Therefore, in FIG. 6B, the straight line that connects the point C which is $2\Psi 2=90$ degrees from the point D and then the point O is set as the rotary axis, and the point D rotates and moves by rotating for 90 degrees to the right. AS the result, the emission light of the 1/4 wavelength phase difference device 7 moves to the point F on the Poincare sphere. The point F shows the left-handed polarized light having ellipticity 1.

Next, the direction of the slow axis of the 1/4 wavelength phase difference device 11 in the polarized glasses 10 is arranged parallel with the slow axis of the 1/4 wavelength phase difference device 7 in the circular polarization conversion device unit 5. Therefore, the polarization operation in the Poincare sphere with respect to the 1/4 wavelength phase difference device 11 is the same as that for the 1/4 wavelength phase difference device 7 in the circular polarization conversion device unit 5. Thus, the polarization operation in the Poincare sphere with respect to the 1/4 wavelength phase difference device 11 in the polarized glasses 10 is also an operation of setting the straight line OC as the rotary axis and rotationally moving by rotating for 90 degrees to the right. As the result, as shown in FIG. 6C, the emission light of the 1/4 wavelength phase difference device 11 in the polarized glasses 10 moves to the point B from the point F on the Poincare sphere. The point B shows the linearly polarized light or 45 degrees to the right.

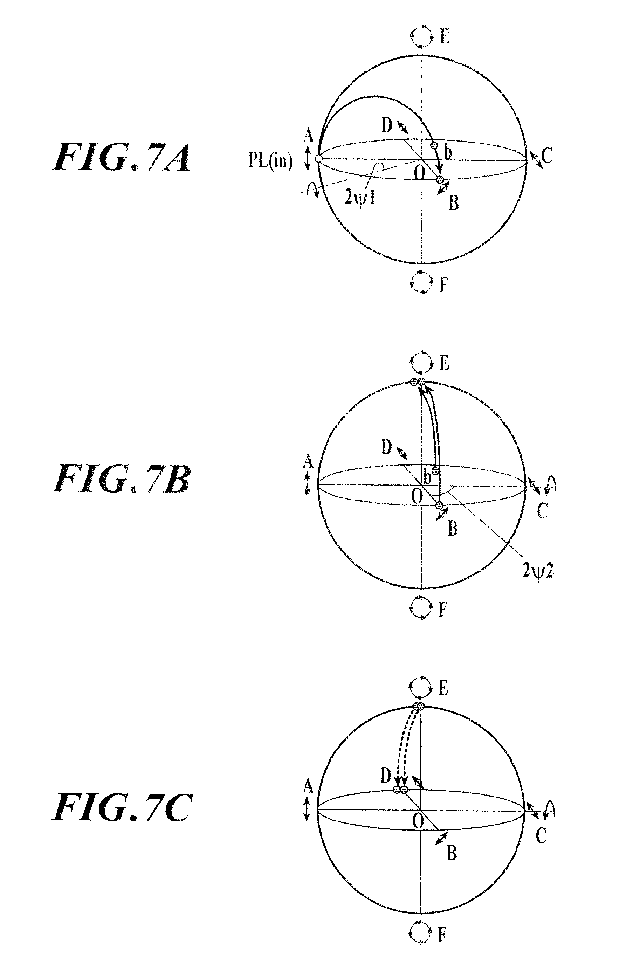

Next, the right eye system shown in FIG. 3 will be described by using the Poincare sphere. FIGS. 7A to 7C are diagrams for explaining operations of the 1/2 wavelength liquid crystal device 6 and the 1/4 wavelength phase difference device 7 of the circular polarization conversion device unit 5 and the 1/4 wavelength phase difference device 11 of the polarized glasses 10 with regard to the right eye system using the Poincare sphere. In FIG. 7A, the input laser light is indicated as PL (in) and the point on the Poincare sphere is set as the point A.

The orientation angle of the slow axis of the 1/2 wavelength liquid crystal device 6 in the right eye system is $\Psi 1=-22.5$ degrees with respect to the polarization direction of the incident laser light, which has the same absolute value and has the opposite polarity as in the orientation angle in the left eye system. Therefore, in FIG. 7A, a straight line which is symmetry to the rotation axis in the case of the left eye system with respect to the straight line OA is set as the rotary axis and the rotation in the same direction is to be applied. In such way, the transmission light of the 1/2 wavelength liquid crystal device 6 corresponds to the point B on the Poincare sphere and is to be the linearly polarized light of 45 degrees to the right. Next, the orientation angle of the slow axes of the 1/4 wavelength phase difference devices 7 and 11 in the circular polarization conversion device unit 5 and the polarized glasses 10 has $\Psi 2=-45$ degrees with respect to the polarized incident light of the 1/4 wavelength phase difference device 7 in the circular polarization conversion device unit 5. Therefore, in FIG. 7B, the straight line which connects the point C which is $2\Psi2=-90$ degrees from the point B and the point O is set as the rotary axis and the point B is rotationally moved by rotating for 90 degrees to the right. As the result, the emission light of the 1/4 wavelength phase difference device 7 corresponds to the point E on the Poincare sphere and is to be the right-hand circularly polarized light. Moreover, the operation in the Poincare sphere with respect to the 1/4 wavelength phase difference device 11 in the polarized glasses 10 is the same as that to the 1/4 wavelength phase difference device 7 in the circular polarization conversion device unit 5. Therefore, the straight line OC is set as the rotary axis and the point E is rotationally moved by rotating for 90 degrees to the right. As the result, as shown in FIG. 7C, the emission light of the 1/4 wavelength phase difference device 11 in the polarized glasses 10 moves to the point D on the Poincare sphere and is to be the linearly polarized light of 45 degrees to the left.

Next, the feature of the present invention which is that the 1/2 wave length liquid crystal device 6 and the 1/4 wavelength phase difference device 7 are arranged so that their wavelength dependency cancel out each other when the angle of the linearly polarized light is changed in the 1/2 wavelength liquid crystal device 6 and is input to the 1/4 wave length phase difference device 7 to become a circularly polarized light (ellipticity 1) will be described hereinafter. The description will be given for the left eye system shown in FIGS. 6A to 6C.

Here, the above descriptions regarding operation using the Poincare sphere is given by supposing that the characteristics of each optical device have ideal phase difference. In the description hereinafter, description will be given by assuming that each optical device has the ideal phase difference with the light of 550 nm corresponding to a green light and the phase difference deviates from the ideal value due to its wavelength dependency as the wavelength deviates from 550 nm. For example, it is supposed that the 1/2 wavelength liquid crystal device 6 is designed so that the phase difference is to be $1/2\lambda$ with the light of 550 nm corresponding to green light.

Moreover, the rotary axis of the 1/4 wavelength phase difference device 7 is expressed as described hereinafter. That is, due to the deviation from the ideal phase difference in the 1/2 wavelength liquid crystal device 6 as described above and the deviation from the ideal phase difference in the 1/4 wavelength phase difference device 7 itself, the polarization of the incident light to the 1/4 wavelength phase difference device 7 and the phase difference of the 1/4 wavelength phase difference device differs from the green light in the red light and the blue light. As the result, the base point for setting the rotary axis and the value of rotation angle ($2\Psi2$) differ for each of the three colors. However, because such detailed description will make the description hard to understand, the rotary axis will be expressed with the green light which is ideal for the purpose of convenience.

It is supposed that the 1/2 wavelength liquid crystal device 6 is designed so that the phase difference is to be $1/2\ \lambda$ for the light of 550 nm corresponding to the green light. Therefore, in case of the light of 550 nm corresponding to green light, an accurate phase difference is applied to the incident laser light by the 1/2 wavelength liquid crystal device 6 and the polarization direction of the transmission light is rotated for 45 degrees to be the linearly polarized light having elliciticity 0 (point D on the Poincare sphere). However, the 1/2 wavelength liquid crystal device 6 has wavelength dependency and the phase difference of $1/2\lambda$ will not be accurately applied for blue light and red light, and therefore, their transmission lights are to be elliptically polarized lights. For example, in the case of red light, because the phase difference to be applied is small, the light does not reach the point D and stops as the point d in the Poincare sphere display.

On the other hand, regarding the trajectory of the 1/4 wavelength phase difference device 7 on the Poincare sphere, the point D (green light) or the point d (red light) is set as the base point and the trajectory follows the later half of the trajectory of the 1/2 wavelength liquid crystal device 6 on the Poincare sphere in its opposite direction and is rotated for 90 degrees toward the point F at the south pole. Therefore, in order for the red light which started from the point d to reach near the point F at the south pole, it is sufficient that the phase difference smaller that the 1/4 wavelength is applied. Similarly to the 1/2 wavelength liquid crystal device 6, the phase difference applied to red light is usually smaller than the phase difference applied to green light. Therefore, phase difference smaller than 1/4 wavelength is applied to the red light which starts from the point d by the 1/4 wavelength phase difference device 7. As the result, the red light can reach near the point F of the south pole same as the green light. That is, the red light which passed through the 1/4 wavelength phase difference device 7 approximates a circularly polarized light having ellipticity 1.

In consideration of blue light, both 1/2 wavelength liquid crystal device 6 and 1/4 wavelength phase difference device 7 have phase difference which is larger than in the case of green light in the case of blue light. Therefore, in FIG. 6A, the red light which passed through the 1/2 wavelength liquid crystal device 6 has the point further to the south pole than the point D which is the position for green light as the starting point and the red light follows a longer trajectory. As the result, the blue light can reach near the point F of the south pole.

Moreover, because the 1/4 wavelength phase difference device 11 is a retarder of broadband and the wavelength dependency of phase difference in the visible light region is extremely small, the light at the point F can be made to move closer to the point B regardless of the wavelength on the Poincare sphere. The above description can be applies to the right eye system similarly.

<Embodiment example>

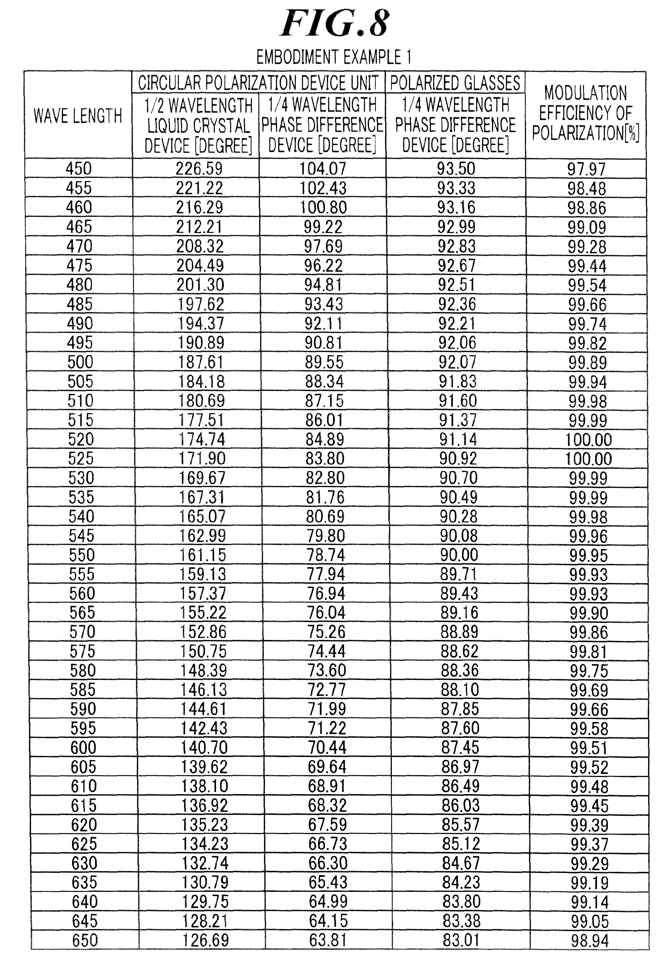

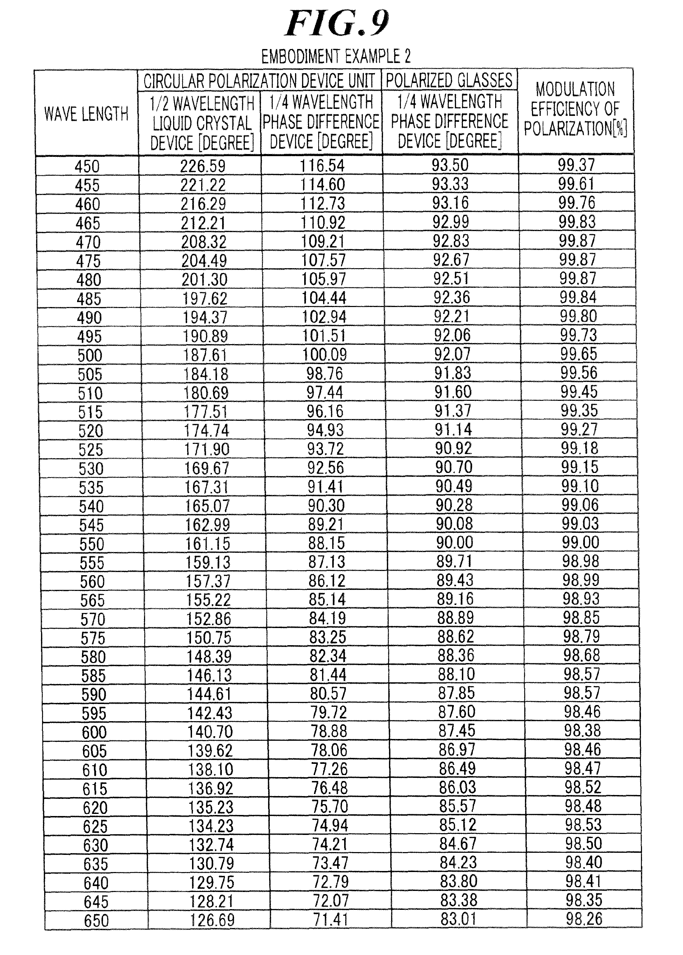

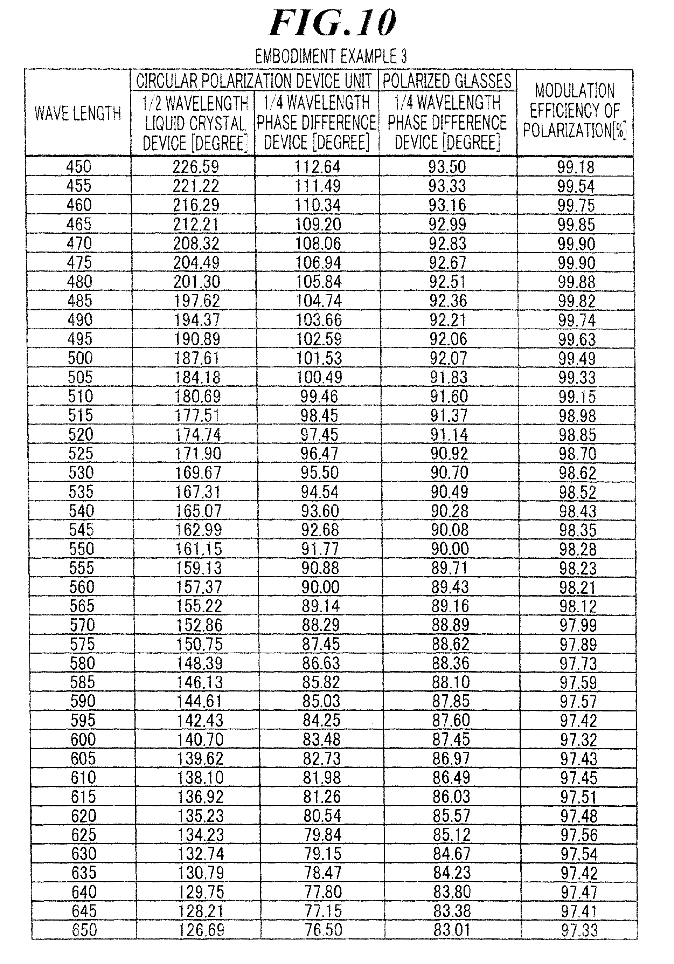

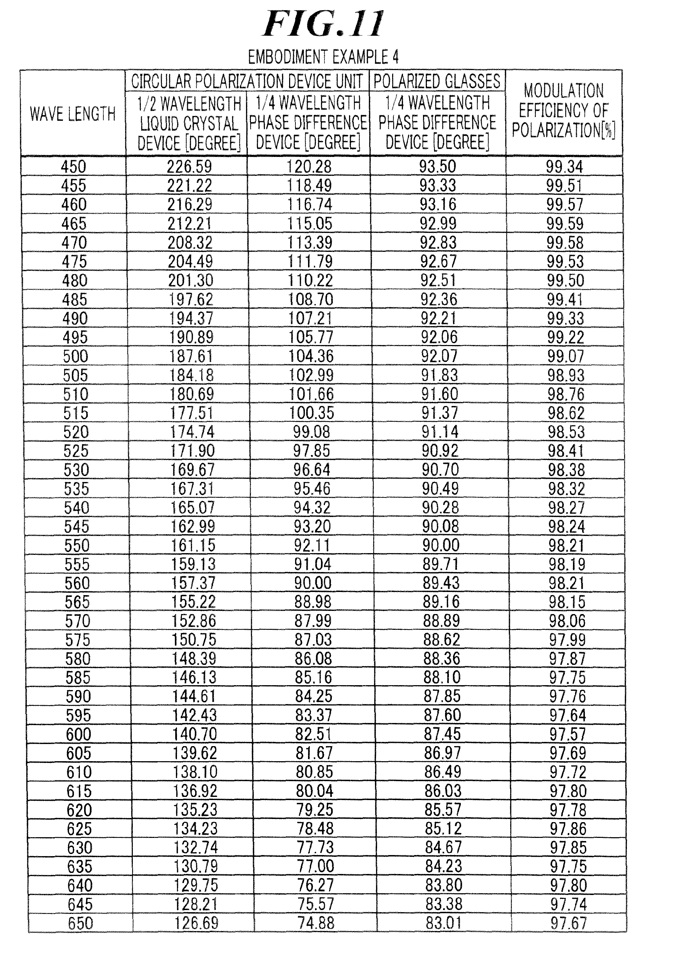

FIGS. 8 to 11 are diagrams showing the embodiment examples 1 to 4 of the circular polarization conversion device units 5, 50 and the polarized glasses 10 according to the embodiment. In the embodiment examples 1 to 4 of FIGS. 8 to 11, measurement values of phase difference and calculated values of modulation efficiency of polarization for each optical device are shown for every 5 nm.

The characteristics of the 1/4 wavelength phase difference device 7 in the circular polarization conversion device unit 5 are difference in each of the embodiment examples 1 to 4. The optical characteristics other than the above characteristics are the same.

Here, modulation efficiency of polarization is calculated as described below.

The formula (2) is a formula for obtaining the Jones vector of the light which is emitted from the polarizer 12 of the polarized glasses. In the formula (2), P indicates the polarizer, W indicates the phase difference plate and the column vector at the right end indicates the Jones vector of the incident light. Based on the formula (2), the Jones vector indicating the incident light to the circular polarization conversion device unit 5 is sequentially multiplied by the 1/2 wavelength liquid crystal device 6, the 1/4 wavelength phase difference devices 7 and 11 and each Jones vector matrix of the polarizer 12 (W·FLC, W·λ/4, W·Wλ/4, P·45).

[Formula 1]

$$I = P_{45} W_{W\lambda/4} W_{\lambda/4} W_{FLC} \begin{bmatrix} 0 \\ 1 \end{bmatrix} \quad (2)$$

At the time of calculation, formulas (3) to (6) are used. The formula (3) is the Jones matrix indicating the phase difference plate having the phase difference Γ. The formula (4) is the Jones matrix indicating the operator which rotates the coordination for the angle φ. The formula (5) is the Jones matrix indication the phase difference plate which is rotated for the angle φ. The formula (6) is the Jones matrix indicating the polarizer in which the transmission axis is rotated only for the angle φ from the x axis. The determinant at the center in the right side of the formula (6) is the Jones matrix indicating the polarizer in which the transmission axis is in the X axis direction.

[Formula 2]

$$W(\Gamma) = \begin{bmatrix} e^{-i\Gamma/2} & 0 \\ 0 & e^{i\Gamma/2} \end{bmatrix} \quad (3)$$

[Formula 3]

$$R(\varphi) = \begin{bmatrix} \cos\varphi & \sin\varphi \\ -\sin\varphi & \cos\varphi \end{bmatrix} \quad (4)$$

[Formula 4]

$$W = R(-\varphi)W(\Gamma)R(\varphi) \qquad (5)$$

[Formula 5]

$$P_\varphi = R(-\varphi)\begin{bmatrix} 1 & 0 \\ 0 & 0 \end{bmatrix}R(\varphi) \qquad (6)$$

Next, the phase difference data of each wavelength of the optical devices which are measures is substituted into the formula (2) and the transmittance is calculated from the obtained Jones vector I and the incident Jones vector and this is set as the modulation efficiency of polarization. Here, because the calculation is performed by the polarizer 12 of the polarized glasses 10 having an ideal polarizer matrix in the above calculation, the modulation efficiency of polarization is calculated by excluding the absorptivity in the actual polarizer 12 of the polarized glasses.

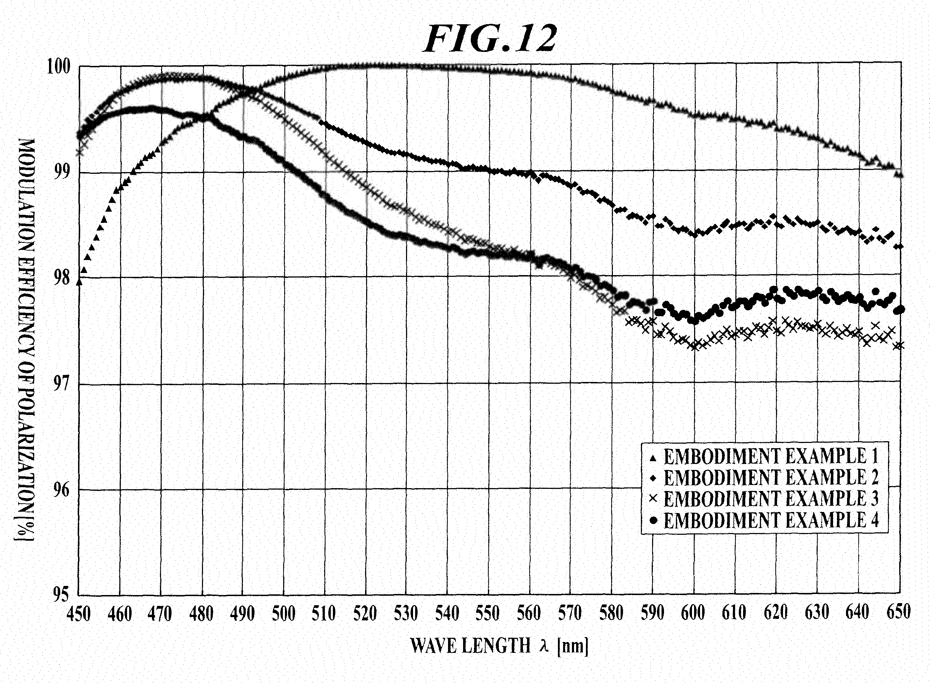

FIG. 12 is a diagram showing the modulation efficiency of polarization in the embodiment examples 1 to 4 of the circular polarization conversion device units 5 and 50 and the polarized glasses 10 according to the embodiment.

According to FIGS. 8 to 11 and 12, in the embodiment examples relating to the circular polarization conversion device unit 5 and the polarized glasses 10 according to the embodiment, it is clearly shown that their modulation efficiency of polarization show good modulation efficiency of polarization in the visible light region (450 nm to 650 nm). The center emission wavelength of the laser light sources 1, 2 and 3 are about 450 nm, 550 nm and 650 nm, respectively, and therefore, obtain equally high efficiency with respect to the corresponding laser lights.

Moreover, according to FIGS. 8 to 11, it can be understood that good modulation efficiency of polarization as shown in FIG. 7 can be obtained even when the 1/2 wavelength liquid crystal device 6 and the 1/4 wavelength phase difference device 7 in the circular polarization conversion device unit 5 are not specifically limited to those where the wavelength dependency in the phase difference are even.

<Comparison example>

Next, configuration of the circular polarization conversion device unit 50 and the polarized glasses 10 in the laser scan type projector and the three dimensional display system according to the comparison example will be described. Here, in the following description, the same references are used to the configurations same as those in the embodiment of the present invention and the detailed descriptions thereof are omitted.

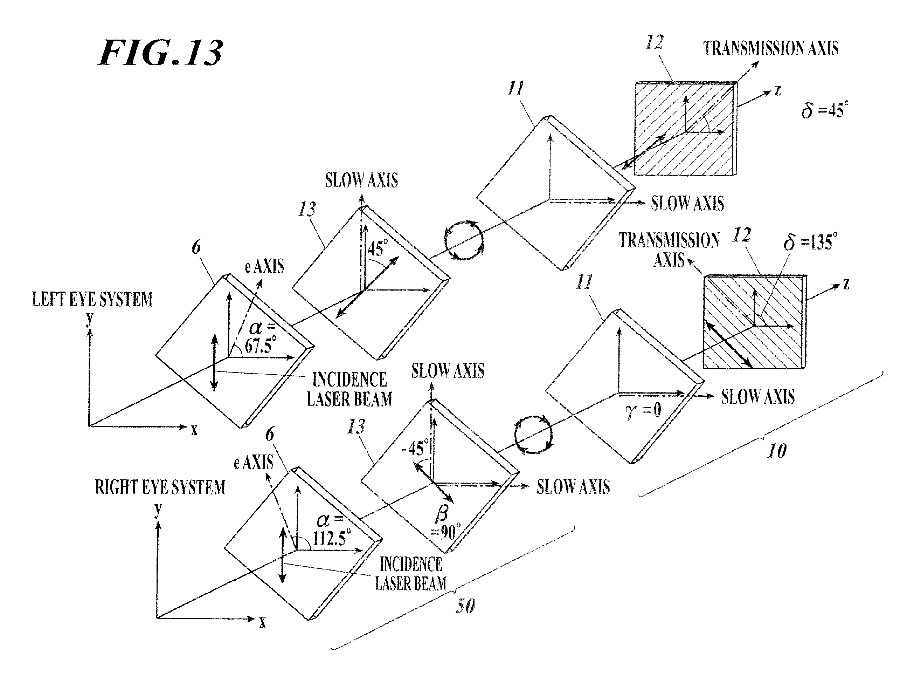

FIG. 13 is a diagram showing a specific optical arrangement of the circular polarization conversion device unit 50 in the laser scan type projector and a polarized glasses 10 of the three dimensional display system according to a comparison example and the parameter configuration thereof.

As shown in FIG. 13, the circular polarization conversion device unit 50 of the comparison example includes the 1/2 wavelength liquid crystal device 6 and the 1/4 wavelength phase difference device 13 which is the third 1/4 wavelength phase difference device.

The difference between the circular polarization conversion device unit 50 of the comparison example and the circular polarization conversion device unit 5 of the embodiment is that the slow axis of the 1/4 wavelength phase difference device 13 is set to $\beta$=90 degrees. That is, the slow axis is arranged to be parallel with the polarization direction of the incident laser light.

Further, the orientation direction of the orientation films in the 1/2 wavelength liquid crystal device 6 is set to the y axis direction similarly to the case of the embodiment. However, the angle $\alpha$ of the e axis (slow axis) is the opposite to that in the case of embodiment examples 1 to 4. That is, in the embodiment examples 1 to 4, the angle $\alpha$ is set to $\alpha$

=112.5 degrees for the left eye system and is set to α=67.5 degrees for the right eye system. On the other hand, the angle α is set to α=67.5 degrees for the left eye system and is set to α=112.5 degrees for the right eye system in the comparison example. That is to make the same polarized glasses 10 used in the embodiment examples 1 to 4 be used by setting the polarization direction of the laser light entering the polarized glasses 10 be the same as in the case of the embodiment.

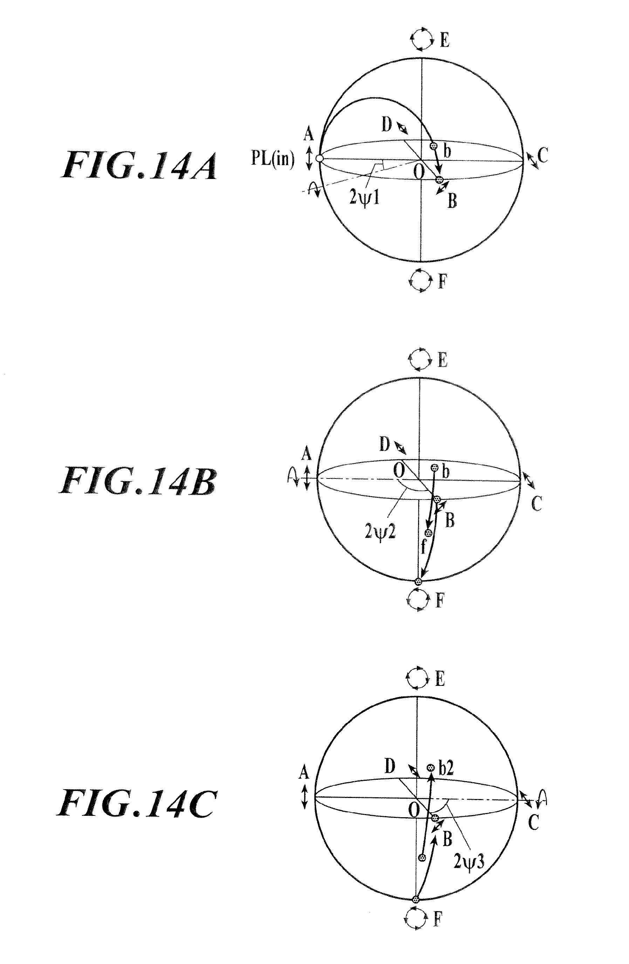

FIG. 14 is a diagram for explaining the operation in the left eye system of the comparison example using the Poincare sphere. In the description for the comparison example, the description is given by assuming that each optical device has an ideal phase difference with the light of 550 nm corresponding to green light and the phase difference deviates from the ideal value due to the wavelength dependency as the wavelength deviates from the 550 nm. For example, it is assumed that the 1/2 wavelength liquid crystal device 6 is designed so that the phase difference is $1/2\lambda$ with the light of 550 nm corresponding to green light.

Moreover, the rotary axis of the 1/4 wavelength phase difference device 7 is expressed as described below. That is, due to the deviation from the ideal phase difference in the 1/2 wavelength liquid crystal device 6 as described above and the deviation from the ideal phase difference in the 1/4 wavelength phase difference device 7 itself, the polarization of the light entering the 1/4 wavelength phase difference device 7 and the phase difference in the 1/4 wavelength phase difference device are different from the green light in the red light and the blue light. As the result, the base point for setting the rotary axis and the value of rotation angle ($2\Psi2$) differ for each of the three colors. However, because such detailed description will make the description hard to understand, the rotary axis will be expressed with the green light which is ideal for the purpose of convenience.

Because the configuration of the 1/2 wavelength liquid crystal device 6 in the left eye system is the same as that in the right eye system shown in FIG. 3 in the comparison example, the laser light which passed through the 1/2 wavelength liquid crystal device 6 exists at the point B on the Poincare sphere similar as shown in FIG. 7A and is the linearly polarized light of 45 degrees to the right.

Next, in FIG. 13, the orientation angle of the slow axis of the 1/4 wavelength phase difference device 7 is $\Psi2=45$ degrees with respect to the polarized incident light of the 1/4 wavelength phase difference device 7. Therefore, in FIG. 14B, the straight line which connects the point A which is $2\Psi2=90$ degrees from the point B and the point O is set as the rotary axis and the point B is rotationally moved by rotating for 90 degrees to the right. As the result, the transmission light of the 1/4 wavelength phase difference device 7 moves to the point F on the Poincare sphere and become the left-handed polarized light.

Next, the direction of the slow axis of the 1/4 wavelength phase difference device 11 in the polarized glasses 10 is $\Psi3=-45$ degrees with respect to the polarization of the incident light to the 1/4 wavelength phase difference device 7 in the circular polarization conversion device unit 50. Therefore, in the operation in the Poincare sphere with respect to the 1/4 wavelength phase difference device 11 in the polarized glasses 10, the straight line connecting the point C which is $2\Psi3=-90$ degrees from the point B and the point O is set as the rotary axis and the point F is rotationally moved by rotating to the right for 90 degrees. As the result, the transmission light of the 1/4 wavelength phase difference device 11 in the polarized glasses 10 moves to the point B on the Poincare sphere and become the linearly polarized light of 45 degrees to the right.

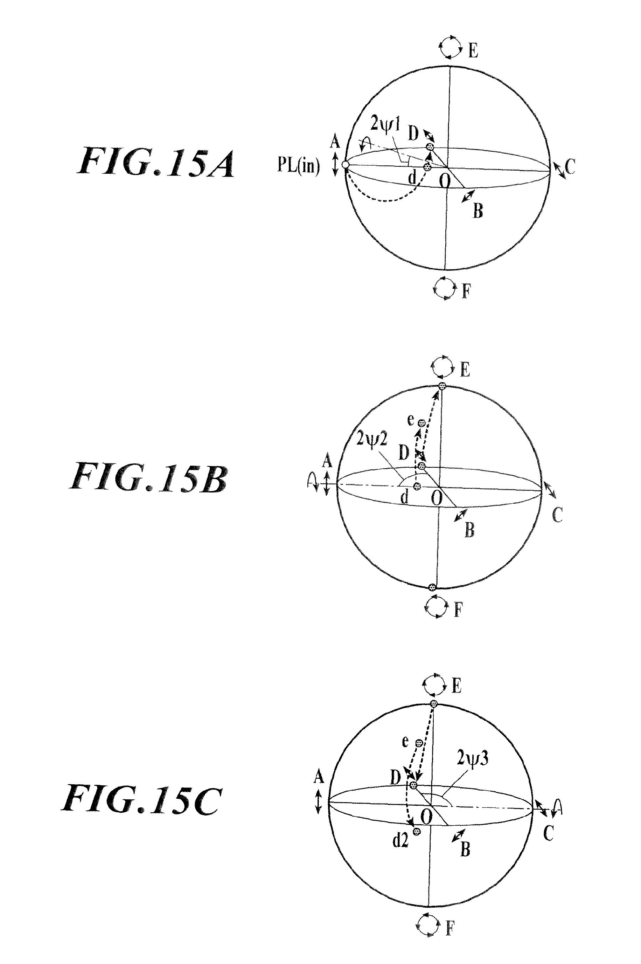

FIG. 15 is a diagram for explaining the operation in the right eye system of the comparison example using the Poincare sphere.

Because the configuration of the 1/2 wavelength liquid crustal device 6 in the right eye system is the same as that in the left eye system shown in FIG. 3 in the comparison example, the laser light which passed through the 1/2 wavelength liquid crystal device 6 exists at the point D on the Poincare sphere similarly as shown in FIG. 6A and the laser light is the linearly polarized light of 45 degrees to the left.

Next, in FIG. 15, the orientation angle of the slow axis in the 1/4 wavelength phase difference device 13 is $\Psi2=-45$ degrees with respect to the polarized incident light to the 1/4 wavelength phase difference device 7. Therefore, in FIG. 15B, the straight line connecting the point A which is $2\Psi2=-90$ degrees from the point D and the point O is set as the rotary axis and the point D is rotationally moved by rotating for 90 degrees to the right. As the result, the transmission light of the 1/4 wavelength phase difference device 13 moves to the point E on the Poincare sphere and become the right-handed polarized light.

Next, the direction of the slow axis in the 1/4 wavelength phase difference device 11 of the polarized glasses 10 is $\Psi3=45$ degrees with respect to the polarization of the incident light to the 1/4 wavelength phase difference device 7 in the circular polarization conversion device unit 50. Therefore, in the operation on the Poincare sphere with respect to the 1/4 wavelength phase difference device 11 in the polarized glasses 10, the straight line OC is set as the rotary axis and the point E is rotationally moved by rotating for 90 degrees to the right. As the result, the transmission light of the 1/4 wavelength phase difference device 11 in the polarized glasses 10 moves to the point D on the Poincare sphere and becomes the linearly polarized light of 45 degrees to the left.

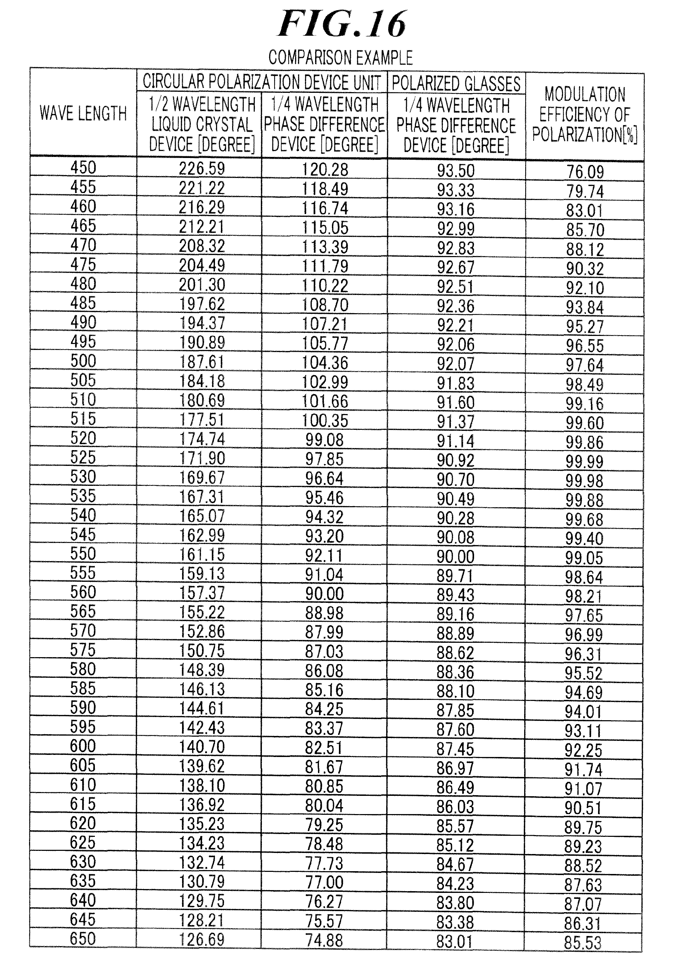

FIG. 16 is a diagram showing the measurement values of phase differences (degree) and the calculation values of modulation efficiency of polarization regarding the circular polarization conversion device unit 50 and the polarized glasses 10 according to the comparison example.

As for the modulation efficiency of polarization with respect to the circular polarization conversion device unit 50 and the polarized glasses 10 according to the comparison example, the efficiency is high in green light although the efficiency is extremely low in blue light and red light. The degradation in the efficiency in the band of blue light and red light will be described as follows.

That is, in the left eye system of the comparison example, when the laser light is green light, the light moves as point A→Point B→Point F→Point B on the Poincare sphere of FIG. 14. Further, in the right eye system, the green light moves as point A→Point D→Point E→Point D. On the other hand, when the light is red light, in the left eye system, the light moves as point A→Point b→Point f→Point b2 and in the right eye system, the light moves as point A→Point d→Point e→Point d2. In such way, in both left and right eye systems, the trajectory o the 1/4 wavelength phase difference device 13 on the Poincare sphere does not follow the opposite direction of the later half of the trajectory in the 1/2 wavelength liquid crystal device 6 and follows the same direction. Therefore, the wavelength dependency of the 1/2 wavelength liquid crystal device 6 and the wavelength dependency of the 1/4 wavelength phase difference device 7 are superimposed on each other in the red light. Thus, the advantages that the wavelength dependency of the 1/2 wave length liquid crystal device and the 1/4 wavelength phase difference device cancelling each other as in the embodiment does not occur in the red light.

Such high value of modulation efficiency of polarization in the laser scan type projector 101 according to the embodiment can be obtained by the direction of the slow axes of the 1/4 wavelength phase difference devices 7 and 11 in the circular polarization conversion device unit 5 and the polarized glasses 10 being set to β=0. That is, the above can be obtained by converting the polarization direction of the incident laser light so as to be ±45 degrees with respect to y axis in the 1/2 wavelength liquid crystal device 6 and by setting the slow axis of the 1/4 wavelength phase difference device 7 in the circular polarization conversion device unit 5 to the x axis direction.

Here, in the three dimensional display system of the embodiment, the polarized glasses 10 are to used by an observer wearing them. When the observer wears the polarized glasses 10 on his or her hear, γ may deviate from γ=0 degrees. However, γ=0 degrees means that γ=0 degrees in a state where the observer is wearing the glasses in a recommended manner.

As described above, in the laser scan type projector 101 and the three dimensional display system 102 according to the embodiment, the arrangement, operation and everything of the optical units are designed to be symmetry by setting the incident laser light to the circular polarization conversion device unit 5 as reference. That is, when setting the polarization direction of the incident light to the circular polarization conversion device unit 5 as the reference, the direction of the e axis (corresponding to the slow axis) of the 1/2 wavelength liquid crustal device 6 is ±22.5 degrees and the direction of the slow axes of the 1/4 wavelength phase difference device 7 of the circular polarization conversion device unit 5 and the 1/4 wavelength phase difference device 11 of the polarized glasses are both 90 degrees.

Further, the laser scan type projector for three dimensional display and the three dimensional display system using the above wherein the modulation efficiency of polarization is high can be provided.

Moreover, in such laser scan type projector 101, the polarization direction of the laser light emitted from the laser light sources 1, 2 and 3 can be converted by the 1/2 wavelength liquid crystal device 6 and the polarization direction of the laser light corresponding to the image for left eye and the laser light corresponding to the image for right eye can be switched so as to be orthogonal to each other, and further, the laser light corresponding to the image for left eye can be changes to a left-handed circularly polarized light and the laser light corresponding to the image for right eye can be changes to a right-handed circularly polarized light, for example, and the screen S can be scanned with such laser lights to project an image.

Moreover, the laser scan type projector 101 can alternately display the image for left eye which is projected by scanning the screen S with the laser light of left-handed circularly polarized light and the image fro right eye which is projected by scanning the screen S with the laser light of right-handed circularly polarized light. Therefore, a user can wear the polarized glasses 10 in which the 1/4 wavelength phase difference device 11 and the polarizer 12 is attached to each of the left and right glass frames and recognize the image on the screen S as three dimensional video by watching the image and can enjoy the good three dimensional video.

Here, the present invention is not limited to the above described embodiment and can be arbitrarily modified within the scope of the present invention. In the description, the 1/2 wavelength liquid crystal device 6 using the high dielectric liquid crystal is described as a specific example of the polarization switching unit. However, this is not limited to the high dielectric liquid crystal. Further, the light crystal is not limitative in any way.

According to a first aspect of the preferred embodiment of the present invention there is provided a laser scan type projector including laser light sources for three colors, the colors being RGB, which alternately emits a laser light relating to an image for left eye and a laser light relating to an image for right eye on the basis of an image signal, a polarization switching unit which makes the laser light relating to the image for left eye and the laser light relating to the image for right eye which have a same incident polarization direction enter and switches the entered two laser lights in two different polarization directions by rotating each of the two laser lights in an opposite direction from the incident polarization direction according to the image for left eye and the image for right eye, a first 1/4 wavelength phase difference device which makes the two laser lights in which the polarization directions are switched by the polarization switching unit enter and which converts the polarization directions of the entered two laser lights so that each of the two laser lights be a circularly polarized light in an opposite direction from each other and a scan unit which scans a projection screen with the laser lights which are circularly polarized by the first 1/4 wavelength phase difference device, and a direction of a slow axis of the first 1/4 wavelength phase difference device forms a 90 degrees angle with the polarization direction of the laser lights before entering the polarization switching unit.

According to a second aspect of the preferred embodiments of the present invention, there is provided a three dimensional display system including the laser scan type projector, a screen on which a projection image from the laser scan type projector is projected and a polarized glasses which projection light of the screen enters, and the polarized glasses comprises second 1/4 wavelength phase difference devices for left and right eyes which the projection light of the screen enters and polarizers which detect light emitted from the second 1/4 wavelength phase difference devices, transmission axes of the polarizers being different from each other by 90 degrees.

**Claims**

1. A laser scan type projector, comprising:

   laser light sources for three colors, the colors being RGB, which alternately emits a laser light relating to an image for left eye and a laser light relating to an image for right eye on the basis of an image signal;
   a polarization switching unit which makes the laser light relating to the image for left eye and the laser light relating to the image for right eye which have a same incident polarization direction enter and switches the entered two laser lights in two different polarization directions by rotating each of the two laser lights in an opposite direction from the incident polarization direction according to the image for left eye and the image for right eye;
   a first 1/4 wavelength phase difference device which makes the two laser lights in which the polarization directions are switched by the polarization switching unit enter and which converts the polarization directions of the entered two laser lights so that each of the two laser lights be a circularly polarized light in an opposite direction from each other; and
   a scan unit which scans a projection screen with the laser lights which are circularly polarized by the first 1/4 wavelength phase difference device, wherein
   a direction of a slow axis of the first 1/4 wavelength phase difference device forms a 90 degrees angle with the polarization direction of the laser lights before entering the polarization switching unit.

2. A three dimensional display system, comprising:

   the laser scan type projector according to claim 1;
   a screen on which a projection image from the laser scan type projector is projected; and
   a polarized glasses which projection light of the screen enters, wherein
   the polarized glasses comprises second 1/4 wavelength phase difference devices for left and right eyes which the projection light of the screen enters and polarizers which detect light emitted from the second 1/4 wavelength phase difference devices, transmission axes of the polarizers being different from each other by 90 degrees.

# FIG.1

# FIG.2

FIG.3

# FIG.4

# FIG.5

FIG.6A

FIG.6B

FIG.6C

FIG.7A

FIG.7B

FIG.7C

# FIG.8

EMBODIMENT EXAMPLE 1

| WAVE LENGTH | CIRCULAR POLARIZATION DEVICE UNIT | | POLARIZED GLASSES | MODULATION EFFICIENCY OF POLARIZATION[%] |
| --- | --- | --- | --- | --- |
| | 1/2 WAVELENGTH LIQUID CRYSTAL DEVICE [DEGREE] | 1/4 WAVELENGTH PHASE DIFFERENCE DEVICE [DEGREE] | 1/4 WAVELENGTH PHASE DIFFERENCE DEVICE [DEGREE] | |
| 450 | 226.59 | 104.07 | 93.50 | 97.97 |
| 455 | 221.22 | 102.43 | 93.33 | 98.48 |
| 460 | 216.29 | 100.80 | 93.16 | 98.86 |
| 465 | 212.21 | 99.22 | 92.99 | 99.09 |
| 470 | 208.32 | 97.69 | 92.83 | 99.28 |
| 475 | 204.49 | 96.22 | 92.67 | 99.44 |
| 480 | 201.30 | 94.81 | 92.51 | 99.54 |
| 485 | 197.62 | 93.43 | 92.36 | 99.66 |
| 490 | 194.37 | 92.11 | 92.21 | 99.74 |
| 495 | 190.89 | 90.81 | 92.06 | 99.82 |
| 500 | 187.61 | 89.55 | 92.07 | 99.89 |
| 505 | 184.18 | 88.34 | 91.83 | 99.94 |
| 510 | 180.69 | 87.15 | 91.60 | 99.98 |
| 515 | 177.51 | 86.01 | 91.37 | 99.99 |
| 520 | 174.74 | 84.89 | 91.14 | 100.00 |
| 525 | 171.90 | 83.80 | 90.92 | 100.00 |
| 530 | 169.67 | 82.80 | 90.70 | 99.99 |
| 535 | 167.31 | 81.76 | 90.49 | 99.99 |
| 540 | 165.07 | 80.69 | 90.28 | 99.98 |
| 545 | 162.99 | 79.80 | 90.08 | 99.96 |
| 550 | 161.15 | 78.74 | 90.00 | 99.95 |
| 555 | 159.13 | 77.94 | 89.71 | 99.93 |
| 560 | 157.37 | 76.94 | 89.43 | 99.93 |
| 565 | 155.22 | 76.04 | 89.16 | 99.90 |
| 570 | 152.86 | 75.26 | 88.89 | 99.86 |
| 575 | 150.75 | 74.44 | 88.62 | 99.81 |
| 580 | 148.39 | 73.60 | 88.36 | 99.75 |
| 585 | 146.13 | 72.77 | 88.10 | 99.69 |
| 590 | 144.61 | 71.99 | 87.85 | 99.66 |
| 595 | 142.43 | 71.22 | 87.60 | 99.58 |
| 600 | 140.70 | 70.44 | 87.45 | 99.51 |
| 605 | 139.62 | 69.64 | 86.97 | 99.52 |
| 610 | 138.10 | 68.91 | 86.49 | 99.48 |
| 615 | 136.92 | 68.32 | 86.03 | 99.45 |
| 620 | 135.23 | 67.59 | 85.57 | 99.39 |
| 625 | 134.23 | 66.73 | 85.12 | 99.37 |
| 630 | 132.74 | 66.30 | 84.67 | 99.29 |
| 635 | 130.79 | 65.43 | 84.23 | 99.19 |
| 640 | 129.75 | 64.99 | 83.80 | 99.14 |
| 645 | 128.21 | 64.15 | 83.38 | 99.05 |
| 650 | 126.69 | 63.81 | 83.01 | 98.94 |

# FIG.9

EMBODIMENT EXAMPLE 2

| WAVE LENGTH | CIRCULAR POLARIZATION DEVICE UNIT | | POLARIZED GLASSES | MODULATION EFFICIENCY OF POLARIZATION[%] |
| | 1/2 WAVELENGTH LIQUID CRYSTAL DEVICE [DEGREE] | 1/4 WAVELENGTH PHASE DIFFERENCE DEVICE [DEGREE] | 1/4 WAVELENGTH PHASE DIFFERENCE DEVICE [DEGREE] | |
|---|---|---|---|---|
| 450 | 226.59 | 116.54 | 93.50 | 99.37 |
| 455 | 221.22 | 114.60 | 93.33 | 99.61 |
| 460 | 216.29 | 112.73 | 93.16 | 99.76 |
| 465 | 212.21 | 110.92 | 92.99 | 99.83 |
| 470 | 208.32 | 109.21 | 92.83 | 99.87 |
| 475 | 204.49 | 107.57 | 92.67 | 99.87 |
| 480 | 201.30 | 105.97 | 92.51 | 99.87 |
| 485 | 197.62 | 104.44 | 92.36 | 99.84 |
| 490 | 194.37 | 102.94 | 92.21 | 99.80 |
| 495 | 190.89 | 101.51 | 92.06 | 99.73 |
| 500 | 187.61 | 100.09 | 92.07 | 99.65 |
| 505 | 184.18 | 98.76 | 91.83 | 99.56 |
| 510 | 180.69 | 97.44 | 91.60 | 99.45 |
| 515 | 177.51 | 96.16 | 91.37 | 99.35 |
| 520 | 174.74 | 94.93 | 91.14 | 99.27 |
| 525 | 171.90 | 93.72 | 90.92 | 99.18 |
| 530 | 169.67 | 92.56 | 90.70 | 99.15 |
| 535 | 167.31 | 91.41 | 90.49 | 99.10 |
| 540 | 165.07 | 90.30 | 90.28 | 99.06 |
| 545 | 162.99 | 89.21 | 90.08 | 99.03 |
| 550 | 161.15 | 88.15 | 90.00 | 99.00 |
| 555 | 159.13 | 87.13 | 89.71 | 98.98 |
| 560 | 157.37 | 86.12 | 89.43 | 98.99 |
| 565 | 155.22 | 85.14 | 89.16 | 98.93 |
| 570 | 152.86 | 84.19 | 88.89 | 98.85 |
| 575 | 150.75 | 83.25 | 88.62 | 98.79 |
| 580 | 148.39 | 82.34 | 88.36 | 98.68 |
| 585 | 146.13 | 81.44 | 88.10 | 98.57 |
| 590 | 144.61 | 80.57 | 87.85 | 98.57 |
| 595 | 142.43 | 79.72 | 87.60 | 98.46 |
| 600 | 140.70 | 78.88 | 87.45 | 98.38 |
| 605 | 139.62 | 78.06 | 86.97 | 98.46 |
| 610 | 138.10 | 77.26 | 86.49 | 98.47 |
| 615 | 136.92 | 76.48 | 86.03 | 98.52 |
| 620 | 135.23 | 75.70 | 85.57 | 98.48 |
| 625 | 134.23 | 74.94 | 85.12 | 98.53 |
| 630 | 132.74 | 74.21 | 84.67 | 98.50 |
| 635 | 130.79 | 73.47 | 84.23 | 98.40 |
| 640 | 129.75 | 72.79 | 83.80 | 98.41 |
| 645 | 128.21 | 72.07 | 83.38 | 98.35 |
| 650 | 126.69 | 71.41 | 83.01 | 98.26 |

# FIG.10

EMBODIMENT EXAMPLE 3

| WAVE LENGTH | CIRCULAR POLARIZATION DEVICE UNIT | | POLARIZED GLASSES | MODULATION EFFICIENCY OF POLARIZATION[%] |
| --- | --- | --- | --- | --- |
| | 1/2 WAVELENGTH LIQUID CRYSTAL DEVICE [DEGREE] | 1/4 WAVELENGTH PHASE DIFFERENCE DEVICE [DEGREE] | 1/4 WAVELENGTH PHASE DIFFERENCE DEVICE [DEGREE] | |
| 450 | 226.59 | 112.64 | 93.50 | 99.18 |
| 455 | 221.22 | 111.49 | 93.33 | 99.54 |
| 460 | 216.29 | 110.34 | 93.16 | 99.75 |
| 465 | 212.21 | 109.20 | 92.99 | 99.85 |
| 470 | 208.32 | 108.06 | 92.83 | 99.90 |
| 475 | 204.49 | 106.94 | 92.67 | 99.90 |
| 480 | 201.30 | 105.84 | 92.51 | 99.88 |
| 485 | 197.62 | 104.74 | 92.36 | 99.82 |
| 490 | 194.37 | 103.66 | 92.21 | 99.74 |
| 495 | 190.89 | 102.59 | 92.06 | 99.63 |
| 500 | 187.61 | 101.53 | 92.07 | 99.49 |
| 505 | 184.18 | 100.49 | 91.83 | 99.33 |
| 510 | 180.69 | 99.46 | 91.60 | 99.15 |
| 515 | 177.51 | 98.45 | 91.37 | 98.98 |
| 520 | 174.74 | 97.45 | 91.14 | 98.85 |
| 525 | 171.90 | 96.47 | 90.92 | 98.70 |
| 530 | 169.67 | 95.50 | 90.70 | 98.62 |
| 535 | 167.31 | 94.54 | 90.49 | 98.52 |
| 540 | 165.07 | 93.60 | 90.28 | 98.43 |
| 545 | 162.99 | 92.68 | 90.08 | 98.35 |
| 550 | 161.15 | 91.77 | 90.00 | 98.28 |
| 555 | 159.13 | 90.88 | 89.71 | 98.23 |
| 560 | 157.37 | 90.00 | 89.43 | 98.21 |
| 565 | 155.22 | 89.14 | 89.16 | 98.12 |
| 570 | 152.86 | 88.29 | 88.89 | 97.99 |
| 575 | 150.75 | 87.45 | 88.62 | 97.89 |
| 580 | 148.39 | 86.63 | 88.36 | 97.73 |
| 585 | 146.13 | 85.82 | 88.10 | 97.59 |
| 590 | 144.61 | 85.03 | 87.85 | 97.57 |
| 595 | 142.43 | 84.25 | 87.60 | 97.42 |
| 600 | 140.70 | 83.48 | 87.45 | 97.32 |
| 605 | 139.62 | 82.73 | 86.97 | 97.43 |
| 610 | 138.10 | 81.98 | 86.49 | 97.45 |
| 615 | 136.92 | 81.26 | 86.03 | 97.51 |
| 620 | 135.23 | 80.54 | 85.57 | 97.48 |
| 625 | 134.23 | 79.84 | 85.12 | 97.56 |
| 630 | 132.74 | 79.15 | 84.67 | 97.54 |
| 635 | 130.79 | 78.47 | 84.23 | 97.42 |
| 640 | 129.75 | 77.80 | 83.80 | 97.47 |
| 645 | 128.21 | 77.15 | 83.38 | 97.41 |
| 650 | 126.69 | 76.50 | 83.01 | 97.33 |

# FIG.11

EMBODIMENT EXAMPLE 4

| WAVE LENGTH | CIRCULAR POLARIZATION DEVICE UNIT | | POLARIZED GLASSES | MODULATION EFFICIENCY OF POLARIZATION[%] |
|---|---|---|---|---|
| | 1/2 WAVELENGTH LIQUID CRYSTAL DEVICE [DEGREE] | 1/4 WAVELENGTH PHASE DIFFERENCE DEVICE [DEGREE] | 1/4 WAVELENGTH PHASE DIFFERENCE DEVICE [DEGREE] | |
| 450 | 226.59 | 120.28 | 93.50 | 99.34 |
| 455 | 221.22 | 118.49 | 93.33 | 99.51 |
| 460 | 216.29 | 116.74 | 93.16 | 99.57 |
| 465 | 212.21 | 115.05 | 92.99 | 99.59 |
| 470 | 208.32 | 113.39 | 92.83 | 99.58 |
| 475 | 204.49 | 111.79 | 92.67 | 99.53 |
| 480 | 201.30 | 110.22 | 92.51 | 99.50 |
| 485 | 197.62 | 108.70 | 92.36 | 99.41 |
| 490 | 194.37 | 107.21 | 92.21 | 99.33 |
| 495 | 190.89 | 105.77 | 92.06 | 99.22 |
| 500 | 187.61 | 104.36 | 92.07 | 99.07 |
| 505 | 184.18 | 102.99 | 91.83 | 98.93 |
| 510 | 180.69 | 101.66 | 91.60 | 98.76 |
| 515 | 177.51 | 100.35 | 91.37 | 98.62 |
| 520 | 174.74 | 99.08 | 91.14 | 98.53 |
| 525 | 171.90 | 97.85 | 90.92 | 98.41 |
| 530 | 169.67 | 96.64 | 90.70 | 98.38 |
| 535 | 167.31 | 95.46 | 90.49 | 98.32 |
| 540 | 165.07 | 94.32 | 90.28 | 98.27 |
| 545 | 162.99 | 93.20 | 90.08 | 98.24 |
| 550 | 161.15 | 92.11 | 90.00 | 98.21 |
| 555 | 159.13 | 91.04 | 89.71 | 98.19 |
| 560 | 157.37 | 90.00 | 89.43 | 98.21 |
| 565 | 155.22 | 88.98 | 89.16 | 98.15 |
| 570 | 152.86 | 87.99 | 88.89 | 98.06 |
| 575 | 150.75 | 87.03 | 88.62 | 97.99 |
| 580 | 148.39 | 86.08 | 88.36 | 97.87 |
| 585 | 146.13 | 85.16 | 88.10 | 97.75 |
| 590 | 144.61 | 84.25 | 87.85 | 97.76 |
| 595 | 142.43 | 83.37 | 87.60 | 97.64 |
| 600 | 140.70 | 82.51 | 87.45 | 97.57 |
| 605 | 139.62 | 81.67 | 86.97 | 97.69 |
| 610 | 138.10 | 80.85 | 86.49 | 97.72 |
| 615 | 136.92 | 80.04 | 86.03 | 97.80 |
| 620 | 135.23 | 79.25 | 85.57 | 97.78 |
| 625 | 134.23 | 78.48 | 85.12 | 97.86 |
| 630 | 132.74 | 77.73 | 84.67 | 97.85 |
| 635 | 130.79 | 77.00 | 84.23 | 97.75 |
| 640 | 129.75 | 76.27 | 83.80 | 97.80 |
| 645 | 128.21 | 75.57 | 83.38 | 97.74 |
| 650 | 126.69 | 74.88 | 83.01 | 97.67 |

# FIG.12

EP 2 624 573 A1

# FIG.13

EP 2 624 573 A1

*FIG.14A*

*FIG.14B*

*FIG.14C*

FIG.15A

FIG.15B

FIG.15C

# *FIG.16*

COMPARISON EXAMPLE

| WAVE LENGTH | CIRCULAR POLARIZATION DEVICE UNIT | | POLARIZED GLASSES | MODULATION EFFICIENCY OF POLARIZATION[%] |
| --- | --- | --- | --- | --- |
| | 1/2 WAVELENGTH LIQUID CRYSTAL DEVICE [DEGREE] | 1/4 WAVELENGTH PHASE DIFFERENCE DEVICE [DEGREE] | 1/4 WAVELENGTH PHASE DIFFERENCE DEVICE [DEGREE] | |
| 450 | 226.59 | 120.28 | 93.50 | 76.09 |
| 455 | 221.22 | 118.49 | 93.33 | 79.74 |
| 460 | 216.29 | 116.74 | 93.16 | 83.01 |
| 465 | 212.21 | 115.05 | 92.99 | 85.70 |
| 470 | 208.32 | 113.39 | 92.83 | 88.12 |
| 475 | 204.49 | 111.79 | 92.67 | 90.32 |
| 480 | 201.30 | 110.22 | 92.51 | 92.10 |
| 485 | 197.62 | 108.70 | 92.36 | 93.84 |
| 490 | 194.37 | 107.21 | 92.21 | 95.27 |
| 495 | 190.89 | 105.77 | 92.06 | 96.55 |
| 500 | 187.61 | 104.36 | 92.07 | 97.64 |
| 505 | 184.18 | 102.99 | 91.83 | 98.49 |
| 510 | 180.69 | 101.66 | 91.60 | 99.16 |
| 515 | 177.51 | 100.35 | 91.37 | 99.60 |
| 520 | 174.74 | 99.08 | 91.14 | 99.86 |
| 525 | 171.90 | 97.85 | 90.92 | 99.99 |
| 530 | 169.67 | 96.64 | 90.70 | 99.98 |
| 535 | 167.31 | 95.46 | 90.49 | 99.88 |
| 540 | 165.07 | 94.32 | 90.28 | 99.68 |
| 545 | 162.99 | 93.20 | 90.08 | 99.40 |
| 550 | 161.15 | 92.11 | 90.00 | 99.05 |
| 555 | 159.13 | 91.04 | 89.71 | 98.64 |
| 560 | 157.37 | 90.00 | 89.43 | 98.21 |
| 565 | 155.22 | 88.98 | 89.16 | 97.65 |
| 570 | 152.86 | 87.99 | 88.89 | 96.99 |
| 575 | 150.75 | 87.03 | 88.62 | 96.31 |
| 580 | 148.39 | 86.08 | 88.36 | 95.52 |
| 585 | 146.13 | 85.16 | 88.10 | 94.69 |
| 590 | 144.61 | 84.25 | 87.85 | 94.01 |
| 595 | 142.43 | 83.37 | 87.60 | 93.11 |
| 600 | 140.70 | 82.51 | 87.45 | 92.25 |
| 605 | 139.62 | 81.67 | 86.97 | 91.74 |
| 610 | 138.10 | 80.85 | 86.49 | 91.07 |
| 615 | 136.92 | 80.04 | 86.03 | 90.51 |
| 620 | 135.23 | 79.25 | 85.57 | 89.75 |
| 625 | 134.23 | 78.48 | 85.12 | 89.23 |
| 630 | 132.74 | 77.73 | 84.67 | 88.52 |
| 635 | 130.79 | 77.00 | 84.23 | 87.63 |
| 640 | 129.75 | 76.27 | 83.80 | 87.07 |
| 645 | 128.21 | 75.57 | 83.38 | 86.31 |
| 650 | 126.69 | 74.88 | 83.01 | 85.53 |

# FIG.17

Europäisches Patentamt
European Patent Office
Office européen des brevets

## EUROPEAN SEARCH REPORT

Application Number

EP 13 15 3465

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/137033 A2 (EASTMAN KODAK CO [US]; KOWARZ MAREK WLODZIMIERZ [US]; MARCUS MICHAEL A) 12 November 2009 (2009-11-12) <br> * page 1, line 4 - line 7 * <br> * page 8, line 4 - line 8 * <br> * page 10, line 8 - line 10 * <br> * page 15, line 26 - page 16, line 4 * <br> * claim 5 * <br> * figures 6, 7, 8 * <br> ----- | 1,2 | INV. <br> H04N13/04 <br> G02B27/22 <br> G02B27/26 <br> G03B21/00 <br> H04N9/31 |
| X | US 2009/079941 A1 (MILLER JOSHUA O [US] ET AL) 26 March 2009 (2009-03-26) <br> * paragraphs [0023] - [0027], [0030], [0032], [0046] * <br> * figures 2,3,4 * <br> ----- | 1,2 | |
| X | EP 0 135 340 A1 (BRIGHTAD LTD [GB]) 27 March 1985 (1985-03-27) <br> * paragraphs [0052] - [0054] * <br> * figures 7A, 7B * <br> ----- | 1,2 | |
| Y | US 2009/231697 A1 (MARCUS MICHAEL A [US] ET AL) 17 September 2009 (2009-09-17) <br> * the whole document * <br> ----- | 1,2 | **TECHNICAL FIELDS SEARCHED (IPC)** <br> H04N <br> G02B <br> G03B |
| Y | US 4 792 850 A (LIPTOH LENNY [US] ET AL) 20 December 1988 (1988-12-20) <br> * the whole document * <br> ----- | 1,2 | |

The present search report has been drawn up for all claims

| Place of search | Date of completion of the search | Examiner |
|---|---|---|
| Munich | 30 April 2013 | Denise, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 624 573 A1

**ANNEX TO THE EUROPEAN SEARCH REPORT
ON EUROPEAN PATENT APPLICATION NO.**

EP 13 15 3465

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2013

| Patent document cited in search report | | Publication date | Patent family member(s) | | Publication date |
|---|---|---|---|---|---|
| WO 2009137033 | A2 | 12-11-2009 | CN | 102016691 A | 13-04-2011 |
| | | | EP | 2277078 A2 | 26-01-2011 |
| | | | JP | 2011523715 A | 18-08-2011 |
| | | | US | 2009278918 A1 | 12-11-2009 |
| | | | WO | 2009137033 A2 | 12-11-2009 |
| US 2009079941 | A1 | 26-03-2009 | NONE | | |
| EP 0135340 | A1 | 27-03-1985 | DE | 3469668 D1 | 07-04-1988 |
| | | | EP | 0135340 A1 | 27-03-1985 |
| | | | US | 4641178 A | 03-02-1987 |
| | | | US | 4692792 A | 08-09-1987 |
| US 2009231697 | A1 | 17-09-2009 | CN | 101965736 A | 02-02-2011 |
| | | | EP | 2272255 A1 | 12-01-2011 |
| | | | JP | 2011519194 A | 30-06-2011 |
| | | | US | 2009231697 A1 | 17-09-2009 |
| | | | WO | 2009114055 A1 | 17-09-2009 |
| US 4792850 | A | 20-12-1988 | NONE | | |

EPO FORM P0459

For more details about this annex : see Official Journal of the European Patent Office, No. 12/82

30

**EP 2 624 573 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3463846 B
- JP 3380132 B